# EUROPEAN PATENT APPLICATION

(11) **EP 2 779 295 A1**
(43) Date of publication of application: **17.09.2014**
(21) Application number: 14159686.6
(22) Date of filing: 14.03.2014
(51) Int. Cl.: H01M 10/04, H01M 10/0587, H01M 2/16

(54) **Jelly-roll type electrode assembly and manufacturing method thereof**

(30) Priority: 15.03.2013 KR 20130028260
(71) Applicant: Samsung SDI Co., Ltd., Yongin-si, Gyeonggi-do (KR)
(72) Inventor: Yoon, Jang-Ho, Yongin-si (KR); Kim, Young-Min, Yongin-si (KR)
(74) Representative: Gulde & Partner

(57) **Abstract**

The present invention refers to a method of manufacturing an electrode assembly for a secondary battery as well as to the electrode assembly produced by the method. The method comprises the steps of:
i) forming a jelly-roll by sequentially stacking and winding a positive electrode plate, a separator having a polymer binder coating thereon, and a negative electrode plate; and
ii) pressing the jelly-roll through a heat press process.

## Description

The present invention relates to a method of manufacturing an electrode assembly for a secondary battery as well as to the electrode assembly produced by the method.

### DESCRIPTION OF THE RELATED ART

As the developments and demands of technologies for mobile devices are increased, demands on secondary batteries are rapidly increased as energy sources of the mobile devices. Secondary batteries may be generally classified into cylinder-type, prism-type (prismatic), and pouch-type batteries according to external and internal structural features thereof. Prism-type and pouch-type batteries may be particularly suitable as mobile devices are miniaturized.

### SUMMARY

According to the present invention, there is provided a method of manufacturing an electrode assembly for a secondary battery. The method comprises the steps of:
forming a jelly-roll by sequentially stacking and winding a positive electrode plate, a separator having a polymer binder coating thereon, and a negative electrode plate; and
pressing the jelly-roll through a heat press process.

Preferably, the polymer binder is polyvinylidene fluoride (PVdF). The heat press process may be performed such that a ratio of a FT-IR signal measured at a wave number of 796 cm⁻¹ or 976 cm⁻¹ representing an alpha phase of the PVdF to a FT-IR signal measured at a wave number 841 cm⁻¹ representing a beta phase of the PVdF is in the range of 1 to 3, especially in the range of 1.5 to 2.5.

The heat press process may include pressing the jelly-roll with a pressure of 100 to 500 kgf. Further, the heat press process may be performed at a temperature of 80 to 130°C. The heat press process may be performed for 60 to 150 seconds.

Preferably, a ceramic layer is coated between the separator and the polymer binder.

According to another aspect of the present invention, there is provided an electrode assembly produced by the method as described before.

The polymer binder may be polyvinylidene fluoride (PVdF). Preferably, a ratio of a FT-IR signal measured at a wave number of 796 cm⁻¹ or 976 cm⁻¹ representing an alpha phase of the PVdF to a FT-IR signal measured at a wave number 841 cm⁻¹ representing a beta phase of the PVdF is in the range of 1 to 3, especially in the range of 1.5 to 2.5.

Tthe positive electrode plate may include a positive electrode tab coupled to an end of a positive electrode collector, the positive electrode collector having a positive electrode active material layer thereon. The negative electrode plate may include a negative electrode tab coupled to an end of a negative electrode collector, the negative electrode collector having a negative electrode active material layer thereon. The positive electrode active material layer may include lithium.

### BRIEF DESCRIPTION OF THE DRAWINGS

Features will become apparent to those of skill in the art by describing in detail example embodiments with reference to the attached drawings in which:
FIG. 1 illustrates a perspective view of an electrode assembly.
FIG. 2 illustrates a sectional view of a separator according to an example embodiment.
FIG. 3A illustrates a view showing a state in which a press process is performed on a jelly-roll type electrode assembly having no polyvinylidene fluoride (PVdF) coated on a separator.
FIG. 3B illustrates a view showing a state in which a press process at ambient temperature is performed on the jelly-roll type electrode assembly having the PVdF coated on the separator.
FIG. 3C illustrates a view showing a state in which a heat press process is performed on the jelly-roll type electrode assembly having the PVdF coated on the separator.
FIG. 4 illustrates a view showing different crystalline conformations of PVdF.
FIG. 5A illustrates a table showing a result obtained by measuring alpha and beta phases at a specific wave number of the PVdF subjected to a press process at ambient temperature.
FIG. 5B illustrates a table showing a result obtained by measuring alpha and beta phases at a specific wave number of the PVdF subjected to a heat press process.
FIG. 6 illustrates a sectional view of a separator according to another example embodiment.
FIG. 7 illustrates a graph showing a change in voltage when a related art electrode assembly is initially charged and a change in voltage when the electrode assembly subjected to the heat press process according to an example embodiment is initially charged.
FIG. 8 illustrates a graph showing a change in thickness when the electrode assembly subjected to the normal temperature press process is charged and a change in thickness when the electrode assembly subjected to the heat press process according to an example embodiment is changed.

### DETAILED DESCRIPTION

Example embodiments will now be described more fully hereinafter with reference to the accompanying drawings.

It will be understood that when an element is referred to as being "between" two elements, it can be the only element between the two elements, or one or more intervening elements may also be present. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. In the drawings, the thickness or size of layers are exaggerated for clarity and not necessarily drawn to scale.

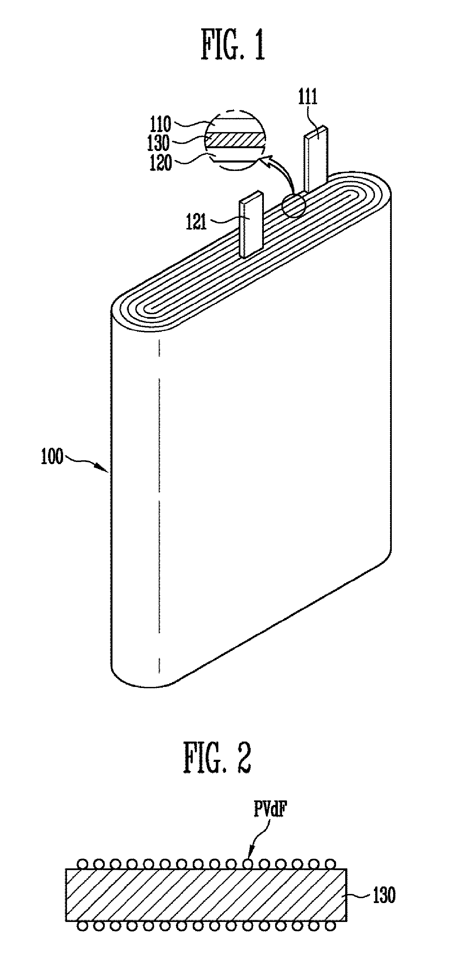

FIG. 1 illustrates a perspective view of an electrode assembly according to an example embodiment.

Referring to FIG. 1, the electrode assembly 100 includes a positive electrode plate 110 (which is formed by connecting a positive electrode tab 111 to one end of a positive electrode collector having a positive electrode active material layer formed thereon), a negative electrode plate 120 (which is formed by connecting a negative electrode tab 121 to one end of a negative electrode collector having a negative electrode active material layer formed thereon), and a separator 130 interposed between the positive and negative electrode plates 110 and 120. The positive electrode plate 110, the separator 130, and the negative electrode plate 120 are sequentially stacked and then wound in a jelly-roll shape. The electrode assembly 100 may be part of a secondary battery, in particular lithium secondary battery.

The positive electrode plate 110 includes the positive electrode collector and the positive electrode active material layer. The positive electrode active material layer may include a layered compound containing lithium, a binder for improving a coupling force, and a conducting material for improving conductivity. The positive electrode collector is generally made of aluminum. The positive electrode collector becomes a movement path of electric charges generated in the positive electrode active material layer, and performs a function of supporting the positive electrode active material layer. A positive electrode non-coating portion (not shown) having no positive electrode active material layer formed thereon is formed in the positive electrode plate 110, and the positive electrode tab 111 is connected to the positive electrode non-coating portion. The positive electrode tab 111 is generally made of aluminum, aluminum alloy, nickel or nickel alloy, etc.

The negative electrode plate 120 includes the negative electrode collector and the negative electrode active material layer. The negative electrode active material layer may include hard carbon or graphite containing carbon, which is frequently used, and a binder for improving a coupling force between active material particles. The negative electrode collector is generally made of copper. The negative electrode collector becomes a movement path of electric charges generated in the negative electrode active material layer, and performs a function of supporting the negative electrode active material layer. A negative electrode non-coating portion (not shown) having no negative electrode active material layer formed thereon is formed in the negative electrode plate 120, and the negative electrode tab 121 is connected to the negative electrode non-coating portion. The negative electrode tab 121 is generally made of aluminum, aluminum alloy, nickel or nickel alloy, etc.

The separator 130 is interposed between the positive and negative electrode plates 110 and 120 so as to insulate the positive and negative electrode plates 110 and 120 from each other. The separator 130 allows ions of the positive and negative electrode plates 110 and 120 to pass therethrough. The separator 130 is made of polyethylene (PE) or polypropylene (PP), etc. The separator 130 may include an electrolyte or may be formed in a liquid or gel phase, etc.

FIG. 2 illustrates a sectional view of a separator according to an example embodiment.

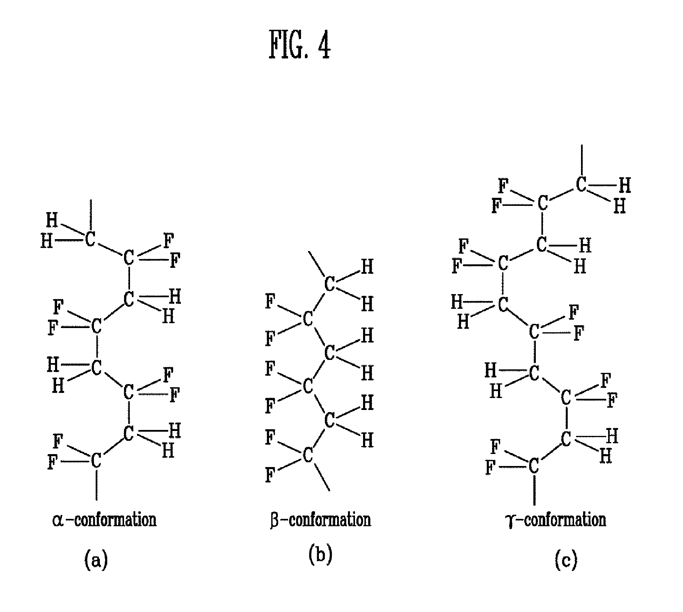

Referring to FIG. 2, a polymer binder is coated on the separator 130. The polymer binder may be, for example, polyvinylidene fluorine (PVdF). PVdF is a polymer, which exhibit pronounced polymorphic crystalline forms, depending on crystallization conditions. Three main different crystalline modifications, i.e., α (TGTG'), β (TTTT), and γ (TTTGTTTG') have been reported so far, depending on the chain conformations as trans (T) or gauche (G) linkages (see Figure 4).

The positive electrode plate 110, the negative electrode plate 120 and the separator 130 are sequentially stacked with the separator 130 interposed between the positive and negative electrode plates 110 and 120. The positive electrode plate 110, the negative electrode plate 120 and the separator 130 are wound using, e.g., a mandrel device. Then, one or both surfaces of the electrode assembly 100 are pressed through a heat press process.

When heat is applied to the electrode assembly 100, the phase of the PVdF coated on the separator 130 is changed and adhesion is improved. The positive and negative electrode plates 110 and 120 are adhered by the adhesion with the separator 130 interposed therebetween, and the positive electrode plate 110, the separator 130 and the negative electrode plate 120 are adhered closely to one another so as to maintain the adhered state even after the heat press process is finished. The adhesion is achieved by the polymer binder.

The heat press process may be performed with a pressure of 100 to 500 kgf, e.g., about 200 kgf, at a temperature of 80 to 130°C for 60 to 150 seconds. In a case where the temperature is 80°C or more, the effect of maintaining the adhesion among the positive electrode plate 110, the separator 130, and the negative electrode plate 120 is enhanced. In a case where the temperature is 130°C or less, pores of the separator 130 may not be blocked due to a change in the material of the separator 130. The α-phase is developed directly from the melt and the PVdF coating usually shows α-phase conformation. During the heat press process, a (partial) conversion of α- into β-phase PVdF takes place, when the heat press process is performed under the conditions as mentioned above. In order to determine the fraction of the contents of α- and β-phase present, IR absorption bands at 796 cm⁻¹ and 976 cm⁻¹ and 841 cm⁻¹, characteristics of the α and β-phases, respectively can be used. In particular, the heat press process may be performed such that a ratio of a FT-IR signal measured at a wave number of 796 cm⁻¹ or 976 cm⁻¹ representing the alpha phase of the PVdF to a FT-IR signal measured at a wave number 841 cm⁻¹ representing the beta phase of the PVdF is in the range of 1 to 3, especially in the range of 1.5 to 2.5.

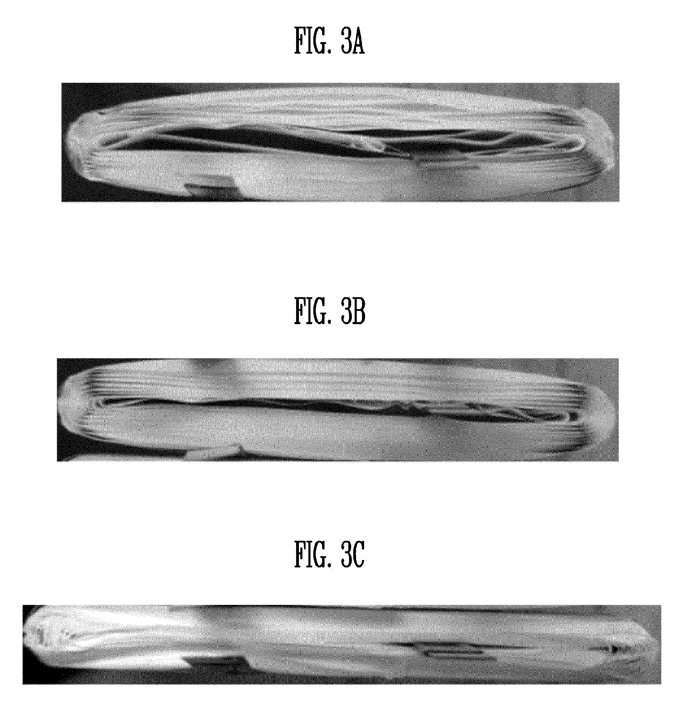

FIG. 3A illustrates a view showing a state in which a normal temperature press process (at ambient temperature) is performed on a jelly-roll type electrode assembly having no PVdF coated on a separator. FIG. 3B is a view showing a state in which the normal temperature press process (at ambient temperature) is performed on the jelly-roll type electrode assembly having the PVdF coated on the separator. FIG. 3C is a view showing a state in which a heat press process is performed on the jelly-roll type electrode assembly having the PVdF coated on the separator.

Referring to FIG. 3A, it can be seen that a gap occurs between the positive and negative electrode plates after the normal temperature press process is performed. In FIG. 3B, it can also be seen that a certain gap occurs between the positive and negative electrode plates even though the adhesion is higher than that in FIG. 3A.

However, referring to FIG. 3C, it can be seen that in the jelly-roll type electrode assembly having the PVdF coated on the separator, the adhesion between the positive and negative electrode plates is substantially maintained even after the heat press process is performed, thereby maintaining the reduced thickness of the electrode assembly when the heat press process is performed. Without being bound by theory, it is believe that this is because the positive and negative electrode plates are adhered to the separator by the thermal deformation of the PVdF coated on the separator.

After the heat press process is performed on the electrode assembly 100, the PVdF coated on the separator 130 may form a mixture of an alpha or beta solid structure shown in FIG. 4(a) or 4(b) according to the crystallization temperature when being quenched in a melting state. The PVdF coated on the separator 130 forms an alpha or a gamma solid structure shown in FIG. 4(c) in a casting state.

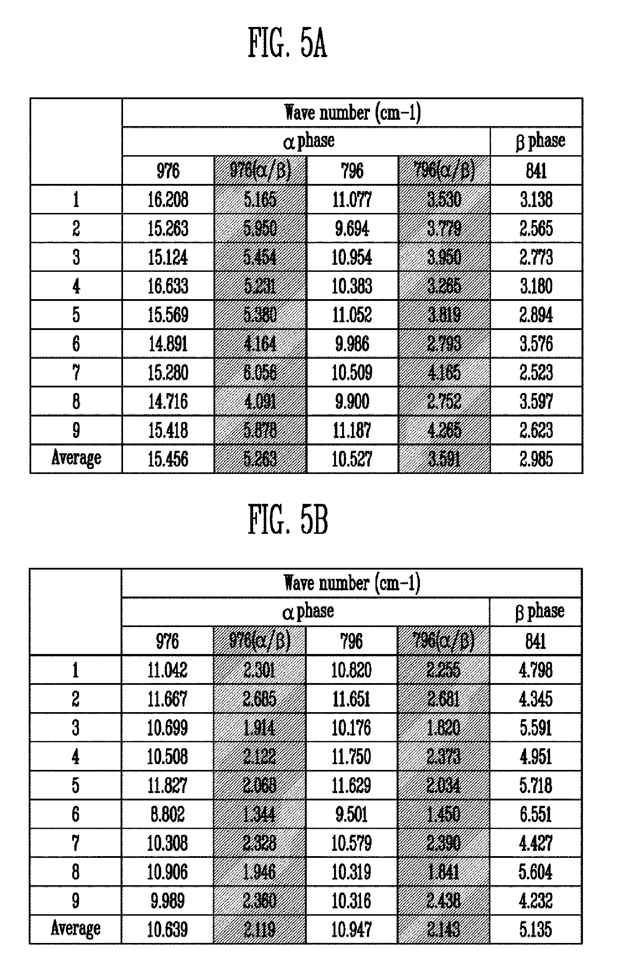

FIG. 5A is a table showing a result obtained by measuring alpha and beta phases at a specific wave number of the PVdF subjected to a normal temperature press process. FIG. 5B is a table showing a result obtained by measuring alpha and beta phases at a specific wave number of the PVdF subjected to a heat press process at 105°C. Contents of the alpha and beta phases are measured by FT-IR (Fourier Transform Infrared Spectroscopy; ambient temperature).

Referring to FIG. 5A, in a case where the normal temperature press process is performed, the average values obtained by dividing a beta phase measured at a specific wave number of 841 cm⁻¹ into alpha phases measured specific wave numbers of 976 cm⁻¹ and 796 cm⁻¹ are 5.263 and 3.591, respectively.

On the other hand, referring to FIG. 5B, in a case where the heat press process is performed, the values obtained by dividing the beta phase measured at a specific wave number of 841 cm⁻¹ into the alpha phases measured specific wave numbers of 976 cm⁻¹ and 796 cm⁻¹ are 2.119 and 2.143, respectively. Thus, it can be seen that parts of the α-phase of PVdF is converted in to the β-phase.

Thus, in a case where the heat press process is performed on the electrode assembly 100, the alpha phase of the PVdF coated on the separator is decreased, and the beta phase of the PVdF coated on the separator is increased. Accordingly, the value obtained by dividing the beta phase into the alpha phase is decreased.

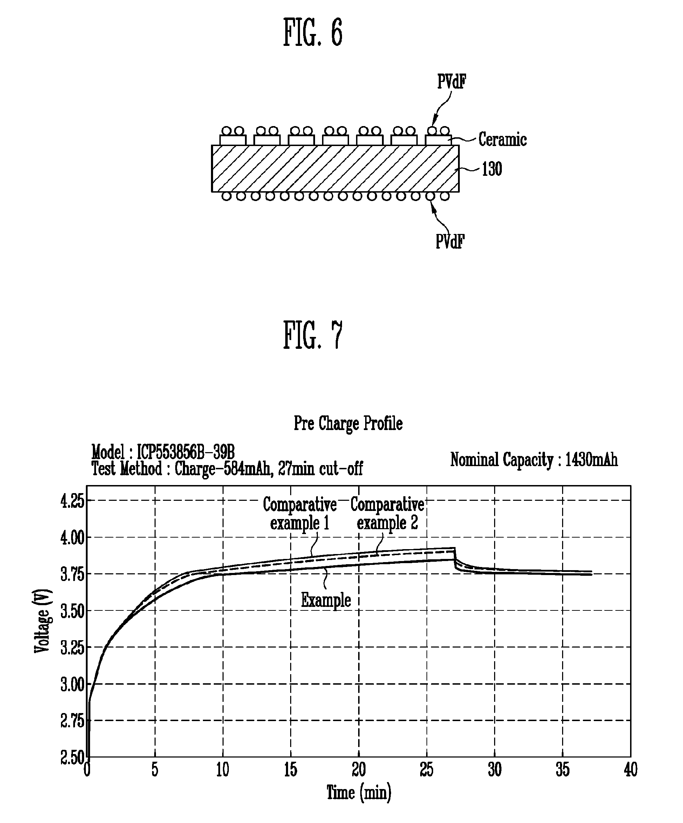

FIG. 6 illustrates a sectional view of a separator according to another example embodiment.

Referring to FIG. 6, a ceramic layer is coated on one surface of the separator 130, and PVdF is coated on the other surface of the separator 130 and the ceramic layer.

In a case where the ceramic layer is coated between the PVdF and the separator 130, it is possible to improve the adhesion between the positive electrode 110, the separator 130, and the negative electrode plate 120. Porosity may be high because of characteristics of the ceramic layer. Thus, the moisturization of an electrolyte may be fast, so that the injection speed of the electrolyte may be increased. Further, the stability of the electrolyte may be enhanced, so that battery lifetime and discharging characteristics may be improved.

An example embodiment of a manufacturing method of a secondary battery including an electrode assembly will now be described.

According to the present example embodiment, first, a positive electrode plate, a separator having PVdF as a polymer binder coated on both surfaces thereof, and a negative electrode plate are sequentially stacked and then wound, thereby forming a jelly-roll. Subsequently, the jelly-roll is pressed through a heat press process. In the present example embodiment, the heat press process is performed with a pressure of 100 to 500 kgf, e.g., about 200 kgf, at a temperature of 80 to 130°C for 60 to 150 seconds. Finally, the jelly-roll subjected to the heat press process is accommodated in a prismatic battery case, and the battery case having an electrolyte injected therein is sealed, thereby manufacturing the secondary battery. Upon increasing the temperature, the α to β-phase transformation is increased. However, for temperatures above 130°C, the resulting material consists predominantly of oriented α-phase. Thus, rising the temperature to much reduces the α to β-transformation efficiency.

In the present example embodiment, a small amount of the electrolyte is generally injected into the battery case, and pre-charging is generally performed to activate the battery in a state in which the injection hole of the battery case is not sealed. Subsequently, gas generated in initial charging is degassed, and the electrolyte is again injected into the battery case. Subsequently, an aging process is performed to provide a time at which the electrolyte can be uniformly distributed, and the battery case is then sealed for performing secondary charging.

FIG. 7 illustrates a graph showing a change in voltage when a related art electrode assembly is initially charged and a change in voltage when an electrode assembly subjected to the heat press process according to an example embodiment is initially charged.

Comparative Example 1 shows a result of the electrode assembly on which the normal temperature press process is performed in a state in which no PVdF is coated on the separator. Comparative Example 2 shows a result of the electrode assembly on which the normal temperature process is performed in a state in which the PVdF is coated on the separator. The Example shows a result of the electrode assembly on which the heat press process according to an example embodiment is performed in a state in which the PVdF is coated on the separator.

Referring to FIG. 7, it can be seen that the overvoltage in initial charging in the Example is decreased as compared with that in Comparative Examples 1 and 2. Without being bound by theory, it is believed that this is because the positive electrode plate, the separator, and the negative electrode plate are maximally adhered to one another in the electrode assembly subjected to the heat press process, and thus, the non-uniformity of a non-charging region in the initial charging is improved as compared with that in Comparative Examples 1 and 2.

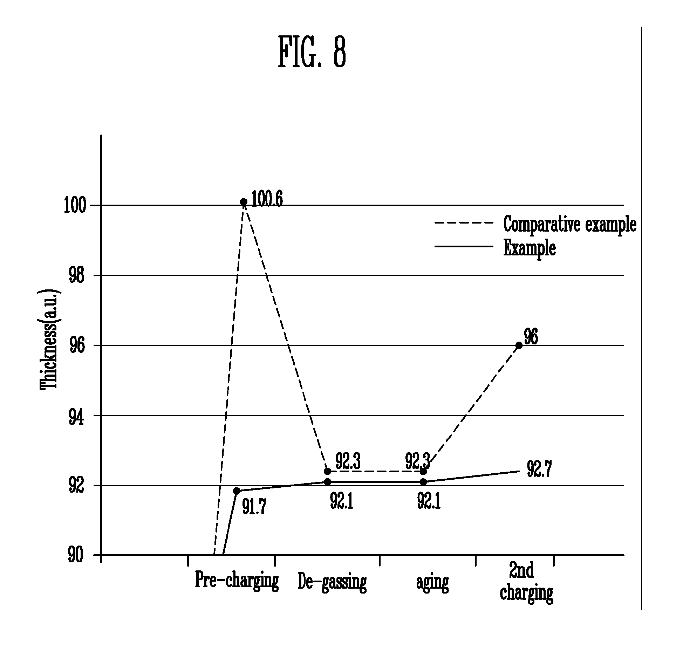

FIG. 8 illustrates a graph showing a change in thickness when the electrode assembly subjected to a normal temperature press process is charged and a change in thickness when the electrode assembly subjected to the heat press process according to an example embodiment is changed.

Referring to FIG. 8, in the electrode assembly subjected to a normal temperature press process according to a comparative example, a change in thickness is very significant in initial charging. The thicknesses before and after secondary charging are 92.3 and 96, respectively, in which the variation in thickness is 3.7. On the other hand, in the electrode assembly subjected to the heat press process according to an example embodiment, a change in thickness is small in initial charging. The thicknesses before and after secondary charging are 92.1 and 92.7, respectively, in which the variation in thickness is merely 0.6.

Thus, in the electrode assembly subjected to the heat press process according to an example embodiment, the variation in thickness may be substantially reduced even in the initial charging. Thus, an electrode assembly in which a positive electrode plate, a separator, and a negative electrode plate are further stacked, as compared with a general electrode assembly, may be wound and inserted into the battery case having the same capacity. Accordingly, it may be possible to improve the capacity or volumetric efficiency of the secondary battery.

By way of summation and review, an electrode assembly for a battery reaction in a secondary battery may have a structure in which an electrolyte is immersed into positive and negative electrode plates respectively having positive and negative electrode active materials coated thereon and a separator interposed therebetween. The electrode assembly of the secondary battery may be generally described as a jelly-roll type (wound-type) electrode assembly and a stacked-type electrode assembly according to structures thereof. Thus, a prism-type secondary battery may be manufactured by accommodating a jelly-roll type electrode assembly or stacked-type electrode assembly in a prism-type case.

In case of the jelly-roll type electrode assembly, a jelly-roll may be pressed through a press before the jelly-roll type electrode assembly is inserted into the prism-type case. In this case, the jelly-roll may maintain flatness to a certain degree at the time when the jelly-roll is pressed, and then have a thickness thinner than the initial thickness of the jelly-roll after an external force applied by the press is removed. However, the thickness of the jelly-roll may return to the initial thickness to a certain degree. If the jelly-roll is inserted into a metal case, the case may surround the jelly-roll by an external force thereof, but the external force may not allow the positive and negative electrode plates of the electrode assembly to be sufficiently adhered closely to each other.

Therefore, in a case where an electrolyte is injected into a prism-type metal can in a general secondary battery, the charging state of the secondary battery may be scattered or varied due to inequality of the distance between positive and negative electrode plates, and therefore, gas or the like may be generated. In this case, the thickness of the secondary battery may be changed by the generated gas.

As described above, embodiments relate to an electrode assembly and a manufacturing method of a secondary battery using the same, in which a distance between adhered positive and negative electrode plates of a jelly-roll type electrode assembly may be reduced in the secondary battery.

According to an embodiment, it may be possible to maintain a state in which the positive electrode plate, the separator, and the negative electrode plate in the electrode assembly are maximally adhered closely to one another.

Further, a change in thickness may be reduced or avoided even in initial charging and secondary charging of the secondary battery having the electrode assembly according to an embodiment inserted therein.

## Claims

1. A method of manufacturing an electrode assembly (100) for a secondary battery, the method comprising the steps of:
forming a jelly-roll by sequentially stacking and winding a positive electrode plate (110), a separator (130) having a polymer binder coating thereon, and a negative electrode plate (120); and
pressing the jelly-roll through a heat press process.

2. The method of claim 1, wherein the polymer binder is polyvinylidene fluoride (PVdF).

3. The method of claim 2, wherein the heat press process is performed such that a ratio of a FT-IR signal measured at a wave number of 796 cm⁻¹ or 976 cm⁻¹ representing an alpha phase of the PVdF to a FT-IR signal measured at a wave number 841 cm⁻¹ representing a beta phase of the PVdF is in the range of 1 to 3.

4. The method of claim 3, wherein the ratio is in the range of 1.5 to 2.5.

5. The method of claims 3 or 4, wherein the heat press process includes pressing the jelly-roll with a pressure of 100 to 500 kgf.

6. The method of one of claims 3 to 5, wherein the heat press process is performed at a temperature of 80 to 130°C.

7. The method of one of claims 3 to 6, wherein the heat press process is performed for 60 to 150 seconds.

8. The method of one of the preceding claims, wherein a ceramic layer is coated between the separator (130) and the polymer binder.

9. An electrode assembly (100) produced by the method of any of the preceding claims.

10. The electrode assembly of claim 9, wherein the polymer binder is polyvinylidene fluoride (PVdF).

11. The electrode assembly of claim 10, wherein a ratio of a FT-IR signal measured at a wave number of 796 cm⁻¹ or 976 cm⁻¹ representing an alpha phase of the PVdF to a FT-IR signal measured at a wave number 841 cm⁻¹ representing a beta phase of the PVdF is in the range of 1 to 3.

12. The electrode assembly of claim 11, wherein the ratio is in the range of 1.5 to 2.5.

13. The electrode assembly of claim 9, wherein
the positive electrode plate (110) includes a positive electrode tab (111) coupled to an end of a positive electrode collector, the positive electrode collector having a positive electrode active material layer thereon, and
the negative electrode plate (120) includes a negative electrode tab (121) coupled to an end of a negative electrode collector, the negative electrode collector having a negative electrode active material layer thereon.

14. The electrode assembly of claim 13, wherein the positive electrode active material layer includes lithium.
